# EUROPÄISCHE PATENTANMELDUNG

(11) **EP 4 191 817 A1**
(43) Veröffentlichungstag der Anmeldung: **07.06.2023**
(21) Anmeldenummer: 21211574.5
(22) Anmeldetag: 01.12.2021
(51) Int. Cl.: H02J 7/00

(54) **LADESTEUERUNG DURCH EINEN AKKUMULATOR**

(71) Anmelder: Hilti Aktiengesellschaft, 9494 Schaan (LI)
(72) Erfinder: Hartmann, Markus, 87665 Mauerstetten (DE); Hauser, Klaus, 86830 Schwabmünchen (DE); Beckert, Benedikt, 86830 Schwabmünchen (DE); Stanger, Robert, 87600 Kaufbeuren (DE); Holubarsch, Markus, 86899 Landsberg am Lech (DE)
(74) Vertreter: Hilti Aktiengesellschaft Corporate Intellectual Property

(57) **Zusammenfassung**

Verfahren zum Steuern eines Ladevorgangs für ein System enthaltend eine Ladevorrichtung sowie einen Akkumulator.

Das Verfahren enthält die Verfahrensschritte:
- Aussenden wenigstens eines Signals von dem Akkumulator zur Durchführung einer Verbindungsaufnahme, wobei das erste Signal wenigstens einen Akku-Kennwert enthält;
- Einstellen der Ladevorrichtung in eine erste Konfiguration, wenn der wenigstens eine Akku-Kennwert einem in der Ladevorrichtung hinterlegten Algorithmus entspricht oder innerhalb in der Ladevorrichtung hinterlegten Grenzwerten liegt;
- Einstellen der Ladevorrichtung in eine zweite Konfiguration, wenn der wenigstens eine Akku-Kennwert nicht einem in der Ladevorrichtung hinterlegten Algorithmus entspricht oder nicht innerhalb in der Ladevorrichtung hinterlegten Grenzwerten liegt; und/oder
- Aussenden wenigstens eines Signals von dem Akkumulator zum Einstellen wenigstens eines Lade-Kennwerts der Ladevorrichtung, wenn die Ladevorrichtung in der ersten Konfiguration eingestellt ist.

System zur Durchführung des Verfahrens zum Steuern eines Ladevorgangs, Ladevorrichtung zur Durchführung des Verfahrens zum Steuern eines Ladevorgangs sowie einen Akkumulator zur Durchführung des Verfahrens zum Steuern eines Ladevorgangs.

## Beschreibung

Die vorliegende Erfindung betrifft ein Verfahren zum Steuern eines Ladevorgangs für ein System enthaltend eine Ladevorrichtung sowie einen mit der Ladevorrichtung wiederlösbaren Akkumulator.

Des Weiteren betrifft die vorliegende Erfindung ein System zur Durchführung des Verfahrens zum Steuern eines Ladevorgangs, wobei das System eine Ladevorrichtung sowie einen mit der Ladevorrichtung wiederlösbaren Akkumulator enthält.

Darüber hinaus betrifft die vorliegende Erfindung eine Ladevorrichtung zur Durchführung des Verfahrens zum Steuern eines Ladevorgangs sowie einen Akkumulator zur Durchführung des Verfahrens zum Steuern eines Ladevorgangs.

Akkumulatoren (auch als Akkus bezeichnet), insbesondere zur Versorgung einer Werkzeugmaschine oder dergleichen mit elektrischer Energie, sind durch den Stand der Technik weitestgehend bekannt. Um elektrische Energie aufzunehmen, zu speichern und bereitzustellen enthalten Akkumulatoren gemäß dem Stand der Technik eine Vielzahl an Energiespeicherzellen (auch als Akku-Zellen oder Sekundärzellen bezeichnet).

Zum Laden eines Akkumulators wird dieser für gewöhnlich mit einer Ladevorrichtung (auch als Ladegerät oder Lader bezeichnet) wiederlösbar verbunden. Elektrische Energie wird dabei von der Ladevorrichtung zu dem Akkumulator geführt, sodass diese in den Energiespeicherzellen gespeichert werden kann.

Bei bisher bekannten Systemen aus Akkumulator und Ladevorrichtung erfolgt das Bereitstellen bzw. Zuführen der elektrischen Energie von der Ladevorrichtung an den Akkumulator mit Hilfe von sogenannten Kennlinien, anhand derer eine auf den speziellen Akkumulator vorbestimmte Lade-Spannung und Lade-Stromstärke verwendet wird.

Ladevorrichtungen gemäß dem Stand der Technik sind oftmals gemäß einer speziellen Spezifikation ausgestaltet. Hierdurch weisen diese Ladevorrichtungen auch eine spezielle Spezifikation zum Laden von entsprechend bzw. korrespondierend ausgestalteten Akkumulator auf. Durch die spezielle Ausgestaltung sind nur spezielle Ladungsspezifikationen mit vorbestimmten Ladungsparametern (bzw. Lade-Kennwerten) in diesen Ladevorrichtungen hinterlegt, sodass auch nur spezielle zu den Ladungsparametern passende Akkumulatoren optimal geladen werden können.

Mit anderen Worten: gemäß dem Stand der Technik können bestimmte Akkumulatoren auch nur mit bestimmten Ladevorrichtungen geladen bzw. unter nahezu optimalen Bedingungen geladen werden.

Problematisch ist dabei, dass andersartig ausgestaltete Akkumulatoren, die nicht in allen Aspekten zu der Spezifikation einer Ladevorrichtung passen, durch eine Ladungsspezifikation mit bestimmten Ladungsparametern geladen werden, die entweder gar nicht oder zumindest nicht optimal zu dem Akkumulator passen. Hierdurch können längere Ladezeiten für den Akkumulator oder ggf. sogar Beschädigungen an dem Akkumulator entstehen.

Es bleibt dabei oftmals auch für einen Anwender unbemerkt, ob der Akkumulator überhaupt in allen Aspekten zu der Ladevorrichtung bzw. zu der Ladungsspezifikation mit den vorbestimmten Ladungsparametern passt oder dadurch suboptimal geladen wird.

Es ist daher Aufgabe der vorliegenden Erfindung das vorstehend Problem zu lösen und insbesondere ein verbessertes Verfahren zum Steuern eines Ladevorgangs bereitzustellen.

Die vorstehend genannte Aufgabe wird durch den erfindungsgemäßen Gegenstand des unabhängigen Anspruchs 1, 10, 12 und 13 gelöst.

Weitere vorteilhafte Ausgestaltungen der vorliegenden Erfindung sind in den abhängigen Ansprüchen beschrieben.

Die Aufgabe wird insbesondere gelöst durch ein Verfahren zum Steuern eines Ladevorgangs für ein System enthaltend eine Ladevorrichtung sowie einen mit der Ladevorrichtung wiederlösbaren Akkumulator.

Erfindungsgemäss enthält das Verfahren zum Steuern eines Ladevorgangs die folgenden Verfahrensschritte:
- Aussenden wenigstens eines Signals von dem Akkumulator an die Ladevorrichtung zur Durchführung einer Verbindungsaufnahme des Akkumulators mit der Ladevorrichtung, wobei das erste Signal wenigstens einen Akku-Kennwert enthält;
- Einstellen der Ladevorrichtung in eine erste Konfiguration, wenn nach Durchführung der Verbindungsaufnahme der wenigstens eine Akku-Kennwert einem in der Ladevorrichtung hinterlegten Algorithmus entspricht oder innerhalb in der Ladevorrichtung hinterlegten Grenzwerten liegt;
- Einstellen der Ladevorrichtung in eine zweite Konfiguration, wenn nach Durchführung der Verbindungsaufnahme der wenigstens eine Akku-Kennwert nicht einem in der Ladevorrichtung hinterlegten Algorithmus entspricht oder nicht innerhalb in der Ladevorrichtung hinterlegten Grenzwerten liegt; und/oder
- Aussenden wenigstens eines Signals von dem Akkumulator an die Ladevorrichtung zum Einstellen wenigstens eines Lade-Kennwerts der Ladevorrichtung, wenn die Ladevorrichtung in der ersten Konfiguration eingestellt ist.

Die Kompatibilität des Akkumulators zu der Ladevorrichtung kann anhand der jeweils eingestellten Konfiguration der Ladevorrichtung berücksichtigt werden. Für den Fall, dass der Akkumulator nicht in allen Aspekten (d.h. Akku-Kennwerten) mit der Spezifikation der Ladevorrichtung übereinstimmt kann eine zweite vorbestimmte Konfiguration eingestellt werden, durch welche beispielsweise nur ein relativ geringer Ladestrom und/oder eine relativ geringe Ladespannung zu Laden des Akkumulators verwendet wird. Dadurch, dass es sich im Wesentlichen um einen Akkumulator mit unbekannten und ggf. inkompatiblen (d.h. unpassenden) Akku-Kennwerten handelt muss die Ladevorrichtung einen zu hohen Ladestrom und/oder zu hohe Ladespannung vermeiden, um mögliche Beschädigung am Akkumulator zu verhindern. Im Gegensatz dazu, kann im Fall, dass der Akkumulator in allen Aspekten mit der Spezifikation der Ladevorrichtung übereinstimmt eine andere vorbestimmte Konfiguration eingestellt werden, durch welche ein korrekter und damit in der Regel höherer Ladestrom und/oder höhere Ladespannung zum Laden des Akkumulators verwendet werden.

Entsprechend einer weiteren Ausführungsform der vorliegenden Erfindung kann vorgesehen sein, dass kein Laden bzw. keine Versorgung des Akkumulators mit elektrischer Energie durch die Ladevorrichtung stattfindet, wenn sich die Ladevorrichtung in der zweiten Konfiguration eingestellt ist. Der Ladestrom und auch die Ladespannung beträgt in diesem Falle null.

Gemäß einer weiteren vorteilhaften Ausführungsform der vorliegenden Erfindung kann vorgesehen sein, dass, wenn die Ladevorrichtung in der ersten Konfiguration eingestellt ist, nach dem Aussenden wenigstens eines Signals von dem Akkumulator an die Ladevorrichtung zum Einstellen wenigstens eines Lade-Kennwerts der Ladevorrichtung das Einstellen des Lade-Kennwerts der Ladevorrichtung in einer vorbestimmten Zeitdauer und/oder mit einem vorbestimmten Toleranzwert geschieht. Der Toleranzwert bezeichnet in diesem Zusammenhang die Genauigkeit, mit der ein bestimmter Lade-Kennwert bzw. die Toleranz, mit der ein Lade-Kennwert eingestellt wird. Wenn die Ladevorrichtung in der ersten Konfiguration eingestellt ist, ist die vorbestimmte Zeitdauer sowie die Toleranz zum Einstellen des wenigstens einen Lade-Kennwertes geringer als wenn die Ladevorrichtung in der zweiten Konfiguration eingestellt ist. Mit anderen Worten: das Einstellen des Lade-Kennwertes erfolgt schneller und mit einer größeren Genauigkeit, wenn die Ladevorrichtung in der ersten Konfiguration eingestellt ist als im Vergleich dazu, wenn die Ladevorrichtung in der zweiten Konfiguration eingestellt ist.

Bei dem in der Ladevorrichtung hinterlegten Grenzwert kann es sich um die Minimalwerte oder Maximalwerte eines Lade-Kennwerts oder auch Lade-Parameters, wie beispielsweise Ladespannung, Ladestromwert, Temperatur oder dergleichen, handeln.

Die Durchführung einer Verbindungsaufnahme des Akkumulators mit der Ladevorrichtung kann auch als Pairing oder Matching bezeichnet werden. Es kann sich dabei um eine erstmalige bzw. initiale Verbindungsaufnahme oder auch um eine erneute bzw. in regelmäßig oder unregelmäßigen Zeitabständen durchgeführte Verbindungsaufnahme handeln.

Gemäß einer alternativen Ausführungsform kann vorgesehen sein, dass zur Durchführung einer Verbindungsaufnahme des Akkumulators mit der Ladevorrichtung wenigstens ein Signal von dem Akkumulator zu der Ladevorrichtung und zusätzlich wenigstens ein Signal von der Ladevorrichtung an den Akkumulator gesendet wird. Die Verbindungsaufnahme kann dabei nur gestartet und durchgeführt werden, wenn wenigstens ein Signal von dem Akkumulator sowie wenigstens ein Signal von der Ladevorrichtung an den Akkumulator gesendet worden ist.

Der Akkumulator kann zur Versorgung einer Werkzeugmaschine mit elektrischer Energie verwendet werden. Der Begriff «Werkzeugmaschine» ist im Sinne der Erfindung als typisches Gerät oder Vorrichtung zu verstehen, dass auf einer Baustelle, beispielsweise einer Hochbau-Baustelle und/oder einer Tiefbau-Baustelle, verwendet werden kann. Es kann sich um einen Bohrhammer, Meißelgerät, Kernbohrgerät, Winkel- oder Trennschleifer, Trenngerät oder dergleichen handeln, ohne darauf beschränkt zu sein.

Darüber hinaus können Hilfsgeräte, wie sie gelegentlich auf Baustellen verwendet werden, wie Lampen, Radios, Staubsauger, Meßgeräte, Bau-Roboter, Schubkarren, Transportgeräte, Vorschubvorrichtungen oder andere Hilfsgeräte «Werkzeugmaschine» sein. Die Werkzeugmaschine kann insbesondere eine mobile Werkzeugmaschine sein, wobei die vorgeschlagene Energieversorgungsvorrichtung insbesondere auch in stationären Werkzeugmaschinen, wie ständergeführten Bohrgeräten oder Kreissägen, zum Einsatz kommen kann. Bevorzugt sind aber handgeführte Werkzeugmaschinen, die insbesondere akku- oder batteriebetrieben sind.

Gemäss einer vorteilhaften Ausgestaltungsform der vorliegenden Erfindung kann vorgesehen sein, dass ein erster Schwellwert für wenigstens einen Lade-Kennwert (Lade-Parameter) der Ladevorrichtung eingestellt ist, wenn sich die Ladevorrichtung in der ersten Konfiguration befindet und dass ein zweiter Schwellwert für wenigstens einen Lade-Kennwert (Lade-Parameter) der Ladevorrichtung eingestellt ist, wenn sich die Ladevorrichtung in der zweiten Konfiguration befindet.

In der ersten Konfiguration wird dabei ein höherer Schwellwert für einen Lade-Kennwert festgelegt als im Vergleich zu der zweiten Konfiguration. Hierdurch lassen sich beispielsweise höhere Ladeströme und/oder Ladespannungen zum Laden des Akkumulators verwenden.

Entsprechend einer weiteren vorteilhaften Ausgestaltungsform der vorliegenden Erfindung kann der Verfahrensschritt enthalten sein:
- Aussenden wenigstens eines Signals von dem Akkumulator an die Ladevorrichtung zum Einstellen wenigstens eines ersten Lade-Kennwertes für eine erste vorbestimmte Zeitdauer und eines wenigstens zweiten Lade-Kennwertes für eine zweite vorbestimmte Zeitdauer.

Hierdurch lässt sich beispielsweise der Wert für den Ladestrom oder für die Ladespannung insbesondere zu Beginn eines Ladevorgangs sukzessiv steigern oder zum Ende des Ladevorgangs schrittweise verringern.

Entsprechend einer weiteren vorteilhaften Ausgestaltungsform der vorliegenden Erfindung kann es möglich sein, dass in regelmäßigen Zeitabständen der Akkumulator ein Signal an die Ladevorrichtung aussendet. Der regelmäßige Zeitabstand kann dabei zwischen 2 und 20 ms (Millisekunden) und insbesondere 10 ms betragen. Das regelmäßig ausgesendete Signal kann dabei wenigstens einen Akku-Kennwert enthalten.

Es ist entsprechend einer weiteren vorteilhaften Ausgestaltungsform der vorliegenden Erfindung möglich, dass der Akkumulator wenigstens ein erstes Signal mit wenigstens einem ersten Akku-Kennwert entsprechend einer ersten Frequenz und wenigstens ein zweites Signal mit wenigstens einem zweiten Akku-Kennwert entsprechend einer zweiten Frequenz an die Ladevorrichtung aussendet. In diesem Zusammenhang bezieht sich eine erste Frequenz auf eine erste Anzahl an regelmäßigen Zeitabständen und eine zweite Frequenz auf eine zweite Anzahl an regelmäßigen Zeitabständen, in denen der Akkumulator ein Signal an die Ladevorrichtung aussendet. So ist es beispielsweise möglich, dass der Akkumulator alle 10 ms ein Signal an die Ladevorrichtung aussendet, um der Ladevorrichtung einen maximal zulässigen Ladespannungswert vorzugeben. Im Gegensatz dazu kann der der Akkumulator alle 100 ms bis 3 s ein Signal an die Ladevorrichtung aussenden, um der Ladevorrichtung einen erfassten Temperaturwert zu übermitteln.

Gemäß einer weiteren vorteilhaften Ausgestaltungsform der vorliegenden Erfindung kann der Verfahrensschritt enthalten sein:
- Aussenden wenigstens eines Signals von dem Akkumulator an die Ladevorrichtung zum Einstellen wenigstens eines ersten Lade-Kennwertes in Abhängigkeit wenigstens eines Akku-Kennwertes.

Bei dem Akku-Kennwertes kann es sich um die gesamte Kapazität aller Energiespeicherzellen in Amperestunden (Ah), das gesamte Volumen aller Energiespeicherzellen, die maximale Spannung aller Energiespeicherzellen, die maximale Spannung einer einzelnen Energiespeicherzelle, die geometrische Dimension einer einzelnen Energiespeicherzelle, die Chemie der Energiespeicherzellen, den elektrischen Widerstand der Energiespeicherzellen oder den mechanischen Aufbau einer Energiespeicherzelle handeln.

Entsprechend einer weiteren vorteilhaften Ausgestaltungsform der vorliegenden Erfindung kann der Verfahrensschritt enthalten sein:
- Aussenden wenigstens eines Signals von dem Akkumulator an die Ladevorrichtung zum Einstellen eines Ladestroms in Abhängigkeit einer Ladespannung, wenigstens einer ersten und/oder zweiten Zeitdauer, eines Temperaturwertes und/oder eines Widerstandwertes.

Gemäß einer weiteren vorteilhaften Ausgestaltungsform der vorliegenden Erfindung kann der Verfahrensschritt enthalten sein:
- Aussenden wenigstens eines Signals von dem Akkumulator an die Ladevorrichtung zum Einstellen wenigstens eines ersten Lade-Kennwertes in Abhängigkeit wenigstens eines von einer Temperaturerfassungseinrichtung erfassbaren Temperaturwertes.

Hierdurch kann insbesondere als Maßnahme nach dem Erfassen eines Temperaturwerts, der einen vorbestimmten Schwellwert erreicht hat, der Ladestrom reduziert werden. Bei der Temperaturerfassungseinrichtung, die den Temperaturwert erfasst, kann es sich um eine Temperaturerfassungseinrichtung handeln, die in dem bzw. Bestandteil des Akkumulators ist. Die Temperaturerfassungseinrichtung erfasst dabei ein Temperaturwert im Inneren des Akkumulators und insbesondere an wenigstens einer Energiespeicherzelle. Vorzugsweise wird die Temperatur an einer zentral positionierten bzw. zwischen allen anderen positionierten Energiespeicherzelle erfasst, da diese Energiespeicherzelle für gewöhnlich den höchsten Temperaturwert aufweist. Entsprechend einer weiteren vorteilhaften Ausgestaltungsform der vorliegenden Erfindung kann der Verfahrensschritt enthalten sein:
- Einstellen wenigstens eines ersten Lade-Kennwertes in Abhängigkeit wenigstens eines von einer Temperaturerfassungseinrichtung erfassbaren Temperaturwertes.

Bei der Temperaturerfassungseinrichtung, die den Temperaturwert erfasst, kann es sich um eine Temperaturerfassungseinrichtung handeln, die in dem bzw. Bestandteil der Ladevorrichtung ist. Die Temperaturerfassungseinrichtung erfasst dabei ein Temperaturwert im Inneren der Ladevorrichtung.

Gemäß einer weiteren vorteilhaften Ausgestaltungsform der vorliegenden Erfindung kann der Verfahrensschritt enthalten sein:
- Aussenden wenigstens eines ersten von der Ladevorrichtung erfassten elektrischen Ladungswertes nach einer ersten vorbestimmten Zeitdauer und eines zweiten von der Ladevorrichtung erfassten elektrischen Ladungswertes nach einer zweiten vorbestimmten Zeitdauer von der Ladevorrichtung an den Akkumulator zum Ermitteln eines Ladezustands des Akkumulators nach Ablauf der zweiten vorbestimmten Zeitdauer.

Hierdurch lässt sich auf einfache Art und Weise der Ladezustand des mit der Ladevorrichtung verbundenen Akkumulators und insbesondere vor Beginn des eigentlichen Ladevorgangs möglichst genau erfassen. Durch ein genaues Erfassen des aktuellen Ladezustands kann eine Restladezeit anhand der gegebenen Umstände ermittelt werden.

Entsprechend einer weiteren vorteilhaften Ausgestaltungsform der vorliegenden Erfindung kann vorgesehen sein, dass der wenigstens eine Lade-Kennwert in Form eines Stromstärkewerts, Spannungswerts, elektrischen Widerstandswerts oder Temperaturgrenzwerts ausgestaltet ist. Insbesondere durch das Festlegen eines relativ hohen Temperaturgrenzwertes kann eine möglichst kurze Ladezeit für den Akkumulator erreicht werden. Ein Temperaturgrenzwert und insbesondere einen maximalen Temperaturobergrenzwert kann durch den speziellen Akku-Kennwert für den Ladevorgang bestimmt werden.

Damit auf die Einflüsse der Temperatur des Akkumulators bei einem Ladevorgang entsprechend und situationsadäquat reagieren werden kann, ist es möglich, dass die Länge der zeitlichen Abstände in Abhängigkeit zu wenigstens einem Temperaturwert des Akkumulators erfolgt. Hierdurch ist es möglich, dass die Länge der zeitlichen Abstände in kritischen Temperaturbereichen, d.h. bei sehr tiefen oder sehr hohen Temperaturen, verkleinert oder vergrössert wird.

Der Stromstärkewert kann dabei zwischen 0 und 50 A, und insbesondere zwischen 3 und 20 A, betragen. Bei dem Stromstärkewert kann es sich um den Ladestrom, mit der ein Akkumulator durch die Ladevorrichtung geladen werden kann.

Der Spannungswert kann zwischen 1,5 und 6 V, und insbesondere zwischen 2,5 und 4,25 V, pro seriell geschalteten Energiespeicherzelle betragen. Bei dem Spannungswert kann es sich um die Ladespannung, mit der ein Akkumulator durch die Ladevorrichtung geladen werden kann.

Gemäß einer weiteren vorteilhaften Ausgestaltungsform der vorliegenden Erfindung kann der Verfahrensschritt enthalten sein:
- Aussenden wenigstens eines Signals durch eine Anzeigevorrichtung des Akkumulators oder der Ladevorrichtung zum Anzeigen, dass die Ladevorrichtung in der ersten oder zweiten Konfiguration eingestellt ist.

Hierdurch kann einem Anwender angezeigt werden, dass ein Akkumulator mit der Ladevorrichtung verbunden ist, dessen Spezifikation bzw. Akku-Kennwerte zu der Ladevorrichtung kompatibel sind. Darüber lässt sich hierdurch einem Anwender anzeigen, dass anhand des Einstellens der ersten Konfiguration ein nahezu optimaler Ladevorgang mit nahezu normalen Ladezeiten zu erwarten ist.

Darüber hinaus wird die Aufgabe gelöst durch ein System zur Durchführung des Verfahrens zum Steuern eines Ladevorgangs nach Anspruch 1, wobei das System eine Ladevorrichtung sowie einen mit der Ladevorrichtung wiederlösbaren Akkumulator enthält, und wobei die Ladevorrichtung eine Steuerungseinrichtung sowie wenigstens einen ersten Transceiver und der Akkumulator eine Steuereinrichtung sowie wenigstens einen zweiten Transceiver enthält.

Erfindungsgemäß ist vorgesehen, dass der wenigstens erste Transceiver der Ladevorrichtung und der wenigstens zweite Transceiver des Akkumulators für eine serielle bidirektionale Datenübertragung ausgestaltet ist.

Hierdurch kann auf einfache und sichere Art und Weise ein Signal- und Datenaustausch zwischen der Ladevorrichtung und dem Akkumulator erreicht werden.

Gemäss einer vorteilhaften Ausgestaltungsform der vorliegenden Erfindung kann vorgesehen sein, dass die Datenübertragung zwischen dem wenigstens ersten Transceiver der Ladevorrichtung und dem wenigstens zweiten Transceiver des Akkumulators auf einer Halb- oder Vollduplex-Technologie basiert.

Darüber hinaus wird die Aufgabe gelöst durch eine Ladevorrichtung zur Durchführung des Verfahrens zum Steuern eines Ladevorgangs.

Erfindungsgemäß ist vorgesehen, dass der wenigstens eine Transceiver für eine Datenübertragung basierend auf einer Halb- oder Vollduplex-Technologie ausgestaltet ist.

Ferner wird die Aufgabe gelöst durch einen Akkumulator zur Durchführung des Verfahrens zum Steuern eines Ladevorgangs.

Erfindungsgemäß ist vorgesehen, dass der wenigstens eine Transceiver für eine Datenübertragung basierend auf einer Halb- oder Vollduplex-Technologie ausgestaltet ist.

Gemäß einer vorteilhaften Ausführungsform kann der Akkumulator eine Nominalspannung zwischen 10V und 72 V, und insbesondere 22 V, aufweisen. Darüber hinaus kann vorgesehen sein, dass der Akkumulator zwischen 3 und 20 Energiespeicherzellen, und insbesondere 6 Energiespeicherzellen enthält. Die Nominalspannung der Energiespeicherzelle beträgt zwischen 1,5 bis 6 V, und insbesondere 2,5 bis 4,25 V und wiederum speziell 3,6 V. Die Nominalspannung des Akkumulator, d.h. aller Energiespeicherzellen des Akkumulators, kann zwischen 10 bis 72 V, insbesondere 18 bis 24 V, betragen.

Der Akkumulator kann entsprechend einer vorteilhaften Ausführungsform einen elektrischen Widerstandswert zwischen 5 und 200 mΩ, und insbesondere von 10 mΩ aufweisen. Der Widerstandswert entspricht dabei einem Gleichstrom-Innenwiderstand nach IEC 61690.

Der Akkumulator weist beispielsweise einen Ladestrom zwischen 1C und 10C, insbesondere 5C auf.

Entsprechend einer weiteren vorteilhaften Ausgestaltungsform der vorliegenden Erfindung kann vorgesehen sein, dass der Akkumulator mit einer Temperatur zwischen -10°C und wenigstens 90°C, und insbesondere bei einer Temperatur zwischen 10°C und 60°C, mit elektrischer Energie geladen werden.

Entsprechend einer vorteilhaften Ausführungsform basieren die Energiespeicherzellen auf einer Lithium-Ionen-Technologie. Alternativ können die Energiespeicherzellen auch auf einer anderen Technologie basieren z.B. Lithium-Cobaltdioxid (LiCoO₂), Lithium-Polymer (LiPo), Lithium-Mangan (Li-Mn), Lithium-Nickel-Cobalt-Mangan (Li(NiCoMn)O2), Lithium-Eisenphosphat (LiFePO₄), Lithiumtitanat (LiTi) oder dergleichen. Es ist dabei auch möglich, dass der Akkumulator Energiespeicherzellen enthält, die nicht auf ein und derselben Technologie basieren. Der Akkumulator kann wenigstens eine Energiespeicherzelle basierend auf einer ersten Technologie und wenigstens eine zweite Energiespeicherzellen basierend auf zweiten Technologie enthalten.

Gemäss einer weiteren vorteilhaften Ausgestaltungsform der vorliegenden Erfindung kann vorgesehen sein, dass eine Anpassung eines wenigstens einen Lade-Kennwertes entsprechend wenigstens einer im Akkumulator gespeicherten Laderoutine erfolgt. Die Laderoutine kann dabei im Wesentlichen eine Lade-Kennlinie enthalten. Bei der Lade-Kennlinie kann es sich beispielsweise um eine im Akkumulator hinterlegte Strom-Spannungs-Kennlinie für den Ladevorgang handeln. Mit Hilfe der Laderoutine ist der Akkumulator in der Lage den Ladevorgang zu überprüfen und ggf. bei Abweichungen von der Laderoutine bzw. von einer Kennlinie den Ladestrom und/oder die Ladespannung entsprechend anzupassen. Hierbei ist es sogar auch möglich, dass der Akkumulator bei einer bestimmten Abweichung von der Laderoutine bzw. von einer Kennlinie den Ladevorgang vollständig unterbricht.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.
- Figur 1: ein System enthaltend einen Akkumulator und einer Ladevorrichtung zur Anwendung des erfindungsgemässen Verfahrens, und
- Figur 2: eine Detailansicht auf die Leistungsanschlüsse und Kommunikationskontakte der Ladevorrichtung und des Akkumulator.

### AUSFÜHRUNGSBEISPIELE

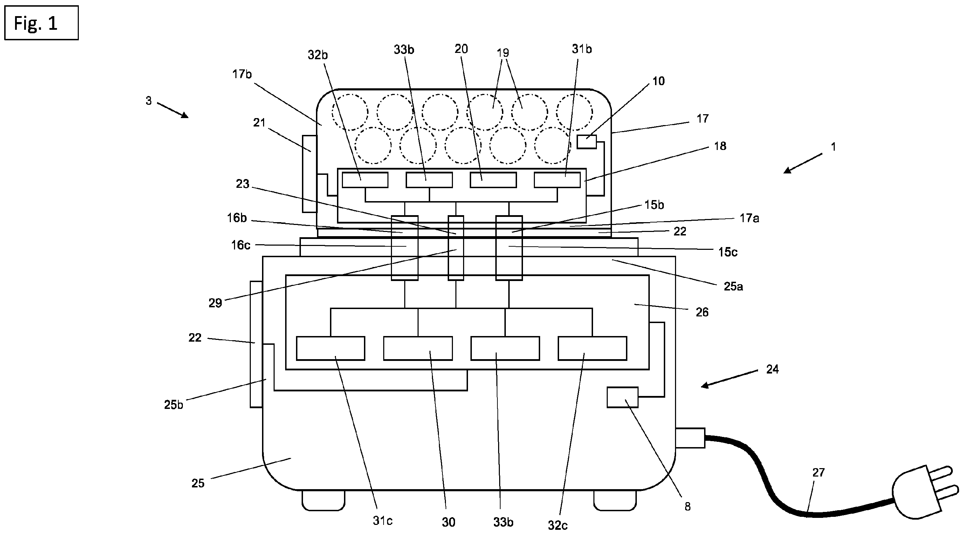

Figur 1 zeigt ein erfindungsgemäßes System gemäß eines ersten beispielhaften Ausführungsform mit einer Ladevorrichtung 24 und einem Akkumulator 3.

Die Ladevorrichtung 24 dient zum Versorgen des angeschlossenen Akkumulators 3 mit elektrischer Energie. Die Ladevorrichtung 24 enthält dabei im Wesentlichen ein Ladevorrichtungsgehäuse 25, eine Steuerungseinrichtung 26, eine erste Vorrichtung zum Ermitteln eines Spannungswertes 31c, eine erste Vorrichtung zum Ermitteln eines Stromstärkewertes 32c, eine erste Speichereinheit 33c, eine Anzeigevorrichtung 22 und eine Energieversorgung 27.

Die erste Speichereinheit 33c dient zum Speichern und Bereitstellen von Daten und Informationen und ist über eine entsprechende Leitung S jeweils mit der ersten Vorrichtung zum Ermitteln eines Spannungswertes 31c, der ersten Vorrichtung zum Ermitteln eines Stromstärkewertes 32c und dem ersten Transceiver 30 verbunden.

In dem vorliegenden Ausführungsbeispiel enthält die Steuerungseinrichtung 26 die erste Vorrichtung zum Ermitteln eines Spannungswertes 31c, die erste Vorrichtung zum Ermitteln eines Stromstärkewertes 32c sowie die erste Speichereinheit 33c.

Die erste Vorrichtung zum Ermitteln eines Spannungswertes 31c dient zum Ermitteln elektrischer Spannungen kann auch als Spannungsmessgerät, Spannungsmesser oder Voltmeter bezeichnet werden.

Die erste Vorrichtung zum Ermitteln eines Stromstärkewertes 32c dient zum Ermitteln der elektrischen Stromstärke und kann auch als Strommessgerät, Strommesser oder Amperemeter bezeichnet werden.

Alternativ kann die erste Vorrichtung zum Ermitteln eines Spannungswertes 31c, die erste Vorrichtung zum Ermitteln eines Stromstärkewertes 32c oder die erste Speichereinheit 33c auch an einer anderen geeigneten Stelle in der Ladevorrichtung 24 positioniert sein.

Wie in Figur 1 ersichtlich ist an einer Vorderseite 25b Ladevorrichtungsgehäuse 25 die Anzeigevorrichtung 22 positioniert. Die Anzeigevorrichtung 22 dient zum visuellen Anzeigen unterschiedlicher Informationen für einen Anwender. Zu den Informationen gehören unter anderem Funktionen, Betriebszustände oder Konfigurationseinstellungen der Ladevorrichtung 24. Des Weiteren enthält das Ladevorrichtungsgehäuse 25 an einer Oberseite 25a eine Ladevorrichtungsschnittstelle 28, die zum wiederlösbaren Verbinden der Ladevorrichtung 24 mit dem Akkumulator 3 dient.

Die Ladevorrichtungsschnittstelle 28 enthält wiederum einen als Pluskontakt ausgestalteten ersten Leistungsanschluss 15c, einen als Minuskontakt ausgestalteten dritten Leistungsanschluss 16c sowie ein ersten Kommunikationskontakt 29. Der Pluskontakt und der Minuskontakt dienen zum Erzeugen eines Stromkreises damit elektrische Energie von der Ladevorrichtung 24 zu dem Akkumulator 3 gelangen kann.

Der erste Leistungsanschluss 15c ist durch eine erste Leitung L9 mit der ersten Vorrichtung zum Ermitteln eines Spannungswertes 31c und durch eine zweite Leitung L10 mit der ersten Vorrichtung zum Ermitteln eines Stromstärkewertes 32c verbunden. Durch die erste und zweite Leitung L9, L10 können an dem ersten Leistungsanschluss 15c ein Spannungswert und Stromstärkewert ermittelt werden. Des Weiteren ist der dritte Leistungsanschluss 16c durch eine dritte Leitung L11 mit der ersten Vorrichtung zum Ermitteln eines Spannungswertes 31c und durch eine vierte Leitung L12 mit der ersten Vorrichtung zum Ermitteln eines Stromstärkewertes 32c verbunden. Durch die dritte und vierte Leitung L11, L12 können an dem dritten Leistungsanschluss 16c ein Spannungswert und Stromstärkewert ermittelt werden.

Die jeweilige Leitung L9 bis L12 kann auch als elektrische Leitung, elektrischer Leiter oder Litze bezeichnet werden.

Der erste Kommunikationskontakt 29 der Ladevorrichtung 24 ist Bestandteil einer drahtgebundenen Übertragungseinrichtung 13 zum Austauschen von Daten und Informationen von der Ladevorrichtung 24 mit einem anderen Kommunikationspartner (beispielsweise der Akkumulator 3).

Die Steuerungseinrichtung 26 dient zum Steuern und Regeln der verschiedenen Funktionen der Ladevorrichtung 24. Darüber hinaus enthält die Steuerungseinrichtung 26 einen ersten Transceiver 30.

Der erste Transceiver 30 ist Bestandteil einer drahtgebundenen Übertragungseinrichtung 13 zum Austauschen von Daten und Informationen der Ladevorrichtung 24 mit einem anderen Kommunikationspartner. Hierzu ist der erste Transceiver 30 durch eine erste Kommunikationsleitung 36 mit dem ersten Kommunikationskontakt 29 der Ladevorrichtung 24 so verbunden, dass Daten und Informationen in Form von Signalen zwischen dem ersten Transceiver 30 und dem ersten Kommunikationskontakt 29 der Ladevorrichtung 24 ausgetauscht werden können.

Die Ladevorrichtung 24 und der Akkumulator 3 sind entsprechend einer beispielhaften Ausführungsform dazu ausgestaltet, dass lediglich und ausschließlich eine digitale Kommunikation mit einer differentiell oder massebezogen Signalübertragung durchgeführt werden kann.

Des Weiteren enthält die Ladevorrichtung 24 eine Temperaturerfassungseinrichtung 8 zum Erfassen eines Temperaturwertes der Ladevorrichtung 24. Die Temperaturerfassungseinrichtung 8 ist über eine Leitung mit der Steuerungseinrichtung 26 verbunden, sodass von der Temperaturerfassungseinrichtung 8 erfasste Temperaturwerte an die Steuerungseinrichtung 26 übermittelt werden können. Gemäß einer alternativen Ausführungsform kann mehr als eine Temperaturerfassungseinrichtung 8 in der Ladevorrichtung 24 enthalten sein. Die Temperaturerfassungseinrichtung 8 kann dabei auch als Temperatursensor, Temperaturmesser oder Thermometer bezeichnet werden.

Wie in Figur 1 erkennbar ist die Energieversorgung 27 in Form eines Stromkabels ausgestaltet. Mit Hilfe der als Stromkabel ausgestalteten Energieversorgung 27 kann die Ladevorrichtung 24 an ein Stromnetz (d.h. Steckdose) angeschlossen werden.

Alternativ kann die Ladevorrichtung 24 auch in Form einer mobilen Energieversorgungseinrichtung verwirklicht sein. Derartige mobile Energieversorgungseinrichtungen können auch als Powerbank bezeichnet werden.

Der in Figur 1 dargestellt Akkumulator 3 enthält gemäß dem dargestellten Ausführungsbeispiel im Wesentlichen ein Akkugehäuse 17, eine zweite Vorrichtung zum Ermitteln eines Spannungswertes 31b, eine zweite Vorrichtung zum Ermitteln eines Stromstärkewertes 32b, eine zweite Speichereinheit 33b, eine Steuerungseinrichtung 18, eine Temperaturerfassungseinrichtung 10, eine Anzeigevorrichtung 21 und eine Anzahl eines Energiespeicherzellen 19 (auch Akku-Zellen genannt).

In dem vorliegenden Ausführungsbeispiel enthält die Steuerungseinrichtung 18 des Akkumulators 3 die zweite Vorrichtung zum Ermitteln eines Spannungswertes 31b, die zweite Vorrichtung zum Ermitteln eines Stromstärkewertes 32b sowie die zweite Speichereinheit 33b.

Die zweite Vorrichtung zum Ermitteln eines Spannungswertes 31b dient zum Ermitteln elektrischer Spannungen kann auch als Spannungsmessgerät, Spannungsmesser oder Voltmeter bezeichnet werden.

Die zweite Vorrichtung zum Ermitteln eines Stromstärkewertes 32b dient zum Ermitteln der elektrischen Stromstärke und kann auch als Strommessgerät, Strommesser oder Amperemeter bezeichnet werden.

Alternativ kann die zweite Vorrichtung zum Ermitteln eines Spannungswertes 31b, die zweite Vorrichtung zum Ermitteln eines Stromstärkewertes 32b oder die zweite Speichereinheit 33b auch an einer anderen geeigneten Stelle in des Akkumulators 3 positioniert sein.

Die zweite Speichereinheit 33b dient zum Speichern und Bereitstellen von Daten und Informationen und ist über eine entsprechende Leitung S jeweils mit der zweiten Vorrichtung zum Ermitteln eines Spannungswertes 31b, der zweiten Vorrichtung zum Ermitteln eines Stromstärkewertes 32b und dem zweiten Transceiver 20 verbunden.

Die Energiespeicherzellen 19 sind im Inneren des Akkugehäuses 17 positioniert und dienen zum Aufnehmen, Speichern sowie Bereitstehen einer elektrischen Energie. Jede einzelne Energiespeicherzelle 19 ist über eine entsprechende Leitung mit der Steuerungseinrichtung 18 verbunden. Die Leitung zwischen den einzelnen Energiespeicherzelle 19 und der Steuerungseinrichtung 18 ist in den Figuren nicht gezeigt. Darüber hinaus sind die Energiespeicherzellen 19 mit einem als Pluskontakt ausgestalteten zweiten Leistungsanschluss 15b und einem als Minuskontakt ausgestalteten vierten Leistungsanschluss 16b des Akkumulators 3 verbunden, sodass die in den Energiespeicherzelle 19 gespeicherte elektrische Energie an dem Pluskontakt und Minuskontakt abgreifbar ist.

Wie in Figur 1 dargestellt ist die Temperaturerfassungseinrichtung 10 in der Nähe der Energiespeicherzellen 19 positioniert, sodass die Temperatur der Energiespeicherzellen 19 mit Hilfe der Temperaturerfassungseinrichtung 10 erfasst werden kann. Die Temperaturerfassungseinrichtung 10 ist über eine Leitung mit der Steuerungseinrichtung 18 verbunden, sodass die von der Temperaturerfassungseinrichtung 10 erfassten Temperaturwerte an die Steuerungseinrichtung 18 übermittelt werden können. Alternativ kann die Temperaturerfassungseinrichtung 10 auch an einer anderen Stelle, beispielsweise in der Nähe einer zentral (d.h. in der Mitte der Energiespeicherzellen) angeordneten Energiespeicherzelle 19 positioniert sein. Gemäß eines weiteren alternativen Ausführungsbeispiels können auch mehr als eine Temperaturerfassungseinrichtung in dem Akkumulator vorgesehen sein. Die Temperaturerfassungseinrichtung 10 kann dabei auch als Temperatursensor, Temperaturmesser oder Thermometer bezeichnet werden.

Die Steuerungseinrichtung 18 dient zum Steuern und Regeln der unterschiedlichen Funktionen des Akkumulators 3. Des Weiteren enthält die Steuerungseinrichtung 18 einen zweiten Transceiver 20.

Der zweite Transceiver 20 des Akkumulators 3 ist Bestandteil der drahtgebundenen Übertragungseinrichtung 13 zum Austauschen von Daten und Informationen des Akkumulators 3 mit einem anderen Kommunikationspartner. Bei einem anderen Kommunikationspartner kann es sich beispielsweise um eine in den Figuren nicht gezeigte Werkzeugmaschine oder der Ladevorrichtung 24 handeln.

Der zweite Transceiver 20 ist durch eine zweite Kommunikationsleitung 34 mit dem zweiten Kommunikationskontakt 23 des Akkumulators 3 so verbunden, dass Daten und Informationen in Form von Signalen zwischen dem zweiten Transceiver 20 und dem zweiten Kommunikationskontakt 23 des Akkumulators 3 ausgetauscht werden können.

Wie in Figur 1 ersichtlich ist an einer Vorderseite 17b des Akkugehäuse 17 die Anzeigevorrichtung 21 positioniert. Die Anzeigevorrichtung 21 dient zum visuellen Anzeigen unterschiedlicher Informationen für einen Anwender. Zu den Informationen gehören unter anderem Funktionen, Betriebszustände oder Konfigurationseinstellungen des Akkumulators 3.

Des Weiteren enthält das Akkugehäuse 17 an einer Oberseite 17a eine Akkuschnittstelle 22, welche dazu dient, den Akkumulator 3 mit der Ladevorrichtung 24 wiederlösbar zu verbinden. Die Akkuschnittstelle 22 dient ebenfalls dazu, den Akkumulator 3 wiederlösbar mit einer Werkzeugmaschine zu verbinden.

Die Akkuschnittstelle 22 enthält wiederum den als Pluskontakt ausgestalteten zweiten Leistungsanschluss 15b, den als Minuskontakt ausgestalteten vierten Leistungsanschluss 16b sowie den zweiten Kommunikationskontakt 23.

Zum Verbinden des Akkumulators 3 mit der Ladevorrichtung 24 wird die Akkuschnittstelle 22 mit der Ladevorrichtungsschnittstelle 28 so in Kontakt gebracht, dass die jeweiligen Leistungsanschlüsse 15b, 15c, 16b, 16c (d.h. die jeweiligen Plus- und Minuskontakte) und Kommunikationskontakte 23, 29 miteinander in Verbindung stehen. Durch die Kontaktierung der Leistungsanschlüsse 15b, 15c, 16b, 16c kann ein Stromkreis so geschlossen werden, dass elektrische Energie von der Ladevorrichtung 24 über die jeweiligen Schnittstellen 22, 29 zu den Energiespeicherzellen 19 des Akkumulators 3 gelangen kann.

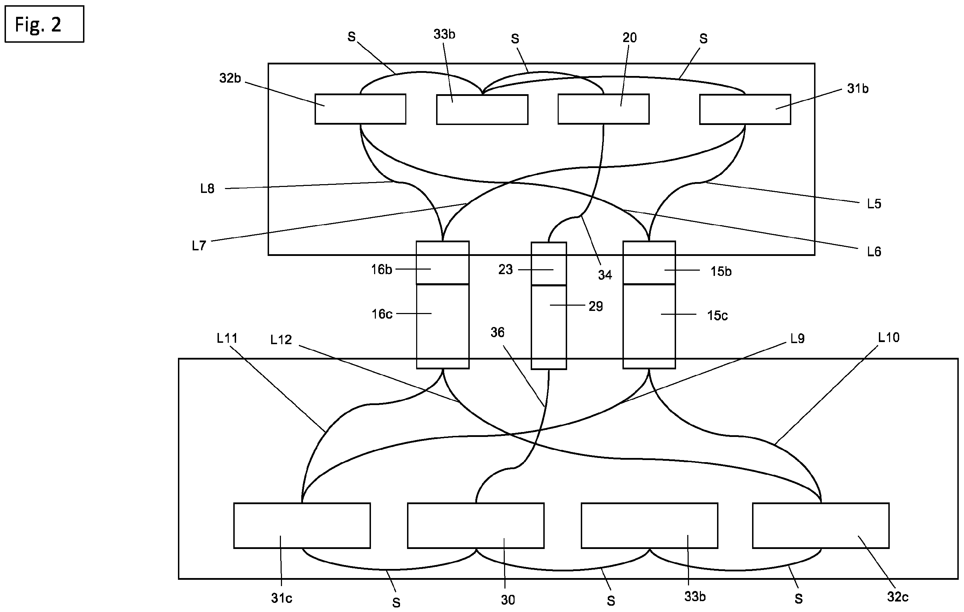

Wie in Figur 2 wiederhin ersichtlich ist der zweite Leistungsanschluss 15b ist durch eine fünfte Leitung L5 mit der zweiten Vorrichtung zum Ermitteln eines Spannungswertes 31b und durch eine sechste Leitung L6 mit der zweiten Vorrichtung zum Ermitteln eines Stromstärkewertes 32b verbunden. Durch die fünfte und sechste Leitung L5, L6 können an dem zweiten Leistungsanschluss 15b ein Spannungswert und Stromstärkewert ermittelt werden. Des Weiteren ist der vierte Leistungsanschluss 16b durch eine siebte Leitung L7 mit der zweiten Vorrichtung zum Ermitteln eines Spannungswertes 31b und durch eine achte Leitung L8 mit der zweiten Vorrichtung zum Ermitteln eines Stromstärkewertes 32b verbunden. Durch die siebte und achte Leitung L7, L8 können an dem vierten Leistungsanschluss 16b ein Spannungswert und Stromstärkewert ermittelt werden.

Die jeweilige Leitung L5 bis L8 kann auch als elektrische Leitung, elektrischer Leiter oder Litze bezeichnet werden.

Dadurch, dass der erste Kommunikationskontakt 29 der Ladevorrichtung 24 sowie der zweite Kommunikationskontakt 23 des Akkumulators 3 in Verbindung gebracht werden, können Daten und Informationen in Form von Signalen zwischen der Ladevorrichtung 24 und dem Akkumulator 3 ausgetauscht werden.

Zur Durchführung des Verfahrens zum Steuern eines Ladevorgangs für ein System enthaltend eine Ladevorrichtung 24 sowie einen mit der Ladevorrichtung 24 wiederlösbaren Akkumulator 3 wird zunächst der Akkumulator 3 mit Hilfe der entsprechenden Schnittstellen 22, 28 der Akkumulator 3 mit der Ladevorrichtung 24 verbunden.

Wenn der Akkumulator 3 wie in Figur 1 dargestellt mit der Ladevorrichtung 24 verbunden ist, stehen zum einen jeweiligen Leistungsanschlüsse 15b, 15c, 16b, 16c (d.h. die jeweiligen Plus- und Minuskontakte) und zum anderen auch die jeweiligen Kommunikationskontakte 23, 29 miteinander in Kontakt. Durch die Verbindung der jeweiligen Leistungsanschlüsse 15b, 15c, 16b, 16c kann ein Stromkreis zum Austausch elektrischer Energie zwischen dem Akkumulator 3 und der Ladevorrichtung 24 erzeugt werden. Austausch von elektrischer Energie bedeutet in diesem Zusammenhang das entweder die elektrische Energie von der Ladevorrichtung 24 zu dem Akkumulator 3 gelangt, um die Energiespeicherzellen 19 des Akkumulators 3 aufzuladen oder elektrische Energie von den Energiespeicherzellen 19 des Akkumulators 3 zu der Ladevorrichtung 24 gelangt, um die Energiespeicherzellen 19 zu entladen.

Wenn die jeweiligen der Kommunikationskontakte 23 des Akkumulators 3 mit dem Kommunikationskontakt 29 der Ladevorrichtung 24 in Kontakt stehen, sendet der Akkumulator 3 ein entsprechendes Signal mit Hilfe des Transceivers 20 über die Kommunikationskontakte 23, 29 zu dem Transceiver 30 der Ladevorrichtung 24. Das Signal dient dabei zur Durchführung einer erstmaligen Verbindungsaufnahme des Akkumulators 3 mit der Ladevorrichtung 24. Die erstmalige Verbindungsaufnahme kann dabei auch als Pairing bezeichnet werden. Das von dem Akkumulator 3 ausgesendete Signal enthält dabei die Akku-Kennwerte.

Bei dem Akku-Kennwertes kann es sich um die gesamte Kapazität aller Energiespeicherzellen in Amperestunden (Ah), das gesamte Volumen aller Energiespeicherzellen, die maximale Spannung aller Energiespeicherzellen, die maximale Spannung einer einzelnen Energiespeicherzelle, die geometrische Dimension einer einzelnen Energiespeicherzelle, die Chemie der Energiespeicherzellen, den elektrischen Widerstand der Energiespeicherzellen oder den mechanischen Aufbau einer Energiespeicherzelle handeln.

In dem vorliegenden Ausführungsbeispiel sendet der Akkumulator 3 ein Signal an die Ladevorrichtung 24 und übermittelt hierdurch Akku-Kennwerte mit Informationen bezüglich der maximalen Spannung aller Energiespeicherzellen sowie einen maximal zulässigen Ladestromwert für den Akkumulator 3. Mit Hilfe der Steuerungseinrichtung 26 sowie den in der Steuerungseinrichtung 26 hinterlegten Grenzwerten kann die Ladevorrichtung 24 bewerten, ob die Ladevorrichtung 24 ausgestaltete ist bzw. einen Ladevorgang mit entsprechenden Lade-Kennwerten (auch Lade-Parameter genannt) enthält, um den Akkumulator 3 zu laden. Wenn im Rahmen der erstmaligen Verbindungsaufnahme die Überprüfung der von dem Akkumulator 3 übermittelten Akku-Kennwerte ergibt, dass die Ladevorrichtung 24 ausgestaltete ist bzw. einen Ladevorgang mit entsprechenden Lade-Kennwerten (auch Lade-Parameter genannt) enthält, wird die Ladevorrichtung 24 in eine erste Konfiguration eingestellt. Mit anderen Worten: die Durchführung der erstmaligen Verbindungsaufnahme des Akkumulators 3 mit der Ladevorrichtung 24 hat ergeben, dass die Ladevorrichtung 24 mit der Spezifikation bzw. den Lade-Kennwerten zu der Spezifikation des Akkumulators 3 bzw. zu den Akku-Kennwerten in wenigstens ausreichendem Masse passt.

Wenn jedoch im Rahmen der erstmaligen Verbindungsaufnahme die Überprüfung der von dem Akkumulator 3 übermittelten Akku-Kennwerte ergibt, dass die Ladevorrichtung 24 nicht entsprechend ausgestaltete ist bzw. keinen passenden Ladevorgang mit entsprechenden Lade-Kennwerten enthält, wird die Ladevorrichtung 24 in eine zweite Konfiguration eingestellt. Mit anderen Worten: die Durchführung der erstmaligen Verbindungsaufnahme des Akkumulators 3 mit der Ladevorrichtung 24 hat ergeben, dass die Ladevorrichtung 24 mit der Spezifikation bzw. den Lade-Kennwerten nicht zu der Spezifikation des Akkumulators 3 bzw. zu den Akku-Kennwerten in wenigstens ausreichendem Masse passt. Wenn die Ladevorrichtung 24 in der zweiten Konfiguration eingestellt ist, wird in der vorliegenden Ausführungsform der Akkumulator 3 nicht durch die Ladevorrichtung 24 mit elektrischer Energie versorgt, d.h. es findet kein Ladevorgang des Akkumulators 3 durch die Ladevorrichtung 24 statt.

Wenn jedoch die Ladevorrichtung 24 im Gegensatz dazu in der ersten Konfiguration eingestellt ist, kann der Akkumulator 3 ein Signal an die Ladevorrichtung aussenden und damit einen Lade-Kennwert einstellen lassen. So kann beispielsweise durch ein entsprechendes Signal der Ladestrom auf einen bestimmten Wert, z.B. 5 A, eingestellt werden.

### Übersicht der Bezugszeichen

- 1: System
- 3: Akkumulator
- 8: Temperaturerfassungseinrichtung der Ladevorrichtung
- 10: Temperaturerfassungseinrichtung des Akkumulators
- 13: drahtgebundene Übertragungseinrichtung
- 15c: erster Leistungsanschluss
- 15b: zweiter Leistungsanschluss
- 16c: dritter Leistungsanschluss
- 16b: vierter Leistungsanschluss
- 17: Akkugehäuse
- 17a: Oberseite des Akkugehäuses
- 17b: Vorderseite des Akkugehäuses
- 18: Steuerungseinrichtung des Akkumulators
- 19: Energiespeicherzelle
- 20: zweiter Transceiver
- 21: Anzeigevorrichtung des Akkumulators
- 22: Anzeigevorrichtung der Ladevorrichtung
- 23: zweiter Kommunikationskontakt des Akkumulators
- 24: Ladevorrichtung
- 25: Ladevorrichtungsgehäuse
- 25a: Oberseite des Ladevorrichtungsgehäuses
- 26: Steuerungseinrichtung der Ladevorrichtung
- 27: Energieversorgung
- 28: Ladevorrichtungsschnittstelle
- 29: erster Kommunikationskontakt der Ladevorrichtung
- 30: erster Transceiver
- 31b: zweite Vorrichtung zum Ermitteln eines Spannungswertes
- 32b: zweite Vorrichtung zum Ermitteln eines Stromstärkewertes
- 33b: zweite Speichereinheit
- 31c: erste Vorrichtung zum Ermitteln eines Spannungswertes
- 32c: eine erste Vorrichtung zum Ermitteln eines Stromstärkewertes
- 33c: erste Speichereinheit
- 34: zweite Kommunikationsleitung
- 36: erste Kommunikationsleitung

- L9: erste Leitung
- L10: zweite Leitung
- L11: dritte Leitung
- L12: vierte Leitung
- L5: fünfte Leitung
- L6: sechste Leitung
- L7: siebte Leitung
- L8: achte Leitung
- S: Leitung

## Patentansprüche

1. Verfahren zum Steuern eines Ladevorgangs für ein System (1) enthaltend eine Ladevorrichtung (24) sowie einen mit der Ladevorrichtung (24) wiederlösbaren Akkumulator (3),
**gekennzeichnet durch** die Verfahrensschritte,
- Aussenden wenigstens eines Signals von dem Akkumulator (3) an die Ladevorrichtung (24) zur Durchführung einer Verbindungsaufnahme des Akkumulators (3) mit der Ladevorrichtung (24), wobei das erste Signal wenigstens einen Akku-Kennwert enthält;
- Einstellen der Ladevorrichtung (24) in eine erste Konfiguration, wenn nach Durchführung der Verbindungsaufnahme der wenigstens eine Akku-Kennwert einem in der Ladevorrichtung (24) hinterlegten Algorithmus entspricht oder innerhalb in der Ladevorrichtung (24) hinterlegten Grenzwerten liegt;
- Einstellen der Ladevorrichtung (24) in eine zweite Konfiguration, wenn nach Durchführung der Verbindungsaufnahme der wenigstens eine Akku-Kennwert nicht einem in der Ladevorrichtung (24) hinterlegten Algorithmus entspricht oder nicht innerhalb in der Ladevorrichtung (24) hinterlegten Grenzwerten liegt; und/oder
- Aussenden wenigstens eines Signals von dem Akkumulator (3) an die Ladevorrichtung (24) zum Einstellen wenigstens eines Lade-Kennwerts der Ladevorrichtung (24), wenn die Ladevorrichtung (24) in der ersten Konfiguration eingestellt ist.

2. Verfahren nach Anspruch 1,
**dadurch gekennzeichnet, dass** ein erster Schwellwert für wenigstens einen Lade-Kennwert der Ladevorrichtung (24) eingestellt ist, wenn sich die Ladevorrichtung (24) in der ersten Konfiguration befindet und dass ein zweiter Schwellwert für wenigstens einen Lade-Kennwert der Ladevorrichtung (24) eingestellt ist, wenn sich die Ladevorrichtung (24) in der zweiten Konfiguration befindet.

3. Verfahren nach Anspruch 1 oder 2,
**gekennzeichnet durch**
- Aussenden wenigstens eines Signals von dem Akkumulator (3) an die Ladevorrichtung (24) zum Einstellen wenigstens eines ersten Lade-Kennwertes für eine erste vorbestimmte Zeitdauer und eines wenigstens zweiten Lade-Kennwertes für eine zweite vorbestimmte Zeitdauer.

4. Verfahren nach wenigstens einem der Ansprüche 1 bis 3,
**gekennzeichnet durch**
- Aussenden wenigstens eines Signals von dem Akkumulator (3) an die Ladevorrichtung (24) zum Einstellen wenigstens eines ersten Lade-Kennwertes in Abhängigkeit wenigstens eines Akku-Kennwertes.

5. Verfahren nach wenigstens einem der Ansprüche 1 bis 4,
**gekennzeichnet durch**
- Aussenden wenigstens eines Signals von dem Akkumulator (3) an die Ladevorrichtung (24) zum Einstellen eines Ladestroms in Abhängigkeit einer Ladespannung, wenigstens einer ersten und/oder zweiten Zeitdauer, eines Temperaturwertes und/oder eines Widerstandwertes.

6. Verfahren nach wenigstens einem der Ansprüche 1 bis 5,
**gekennzeichnet durch**
- Aussenden wenigstens eines Signals von dem Akkumulator (3) an die Ladevorrichtung (24) zum Einstellen wenigstens eines ersten Lade-Kennwertes in Abhängigkeit wenigstens eines von einer Temperaturerfassungseinrichtung (8, 10) erfassbaren Temperaturwertes.

7. Verfahren nach wenigstens einem der Ansprüche 1 bis 6,
**gekennzeichnet durch**
- Aussenden wenigstens eines ersten von der Ladevorrichtung (24) erfassten elektrischen Ladungswertes nach einer ersten vorbestimmten Zeitdauer und eines zweiten von der Ladevorrichtung (24) erfassten elektrischen Ladungswertes nach einer zweiten vorbestimmten Zeitdauer von der Ladevorrichtung (24) an den Akkumulator (3) zum Ermitteln eines Ladezustands des Akkumulators (3) nach Ablauf der zweiten vorbestimmten Zeitdauer.

8. Verfahren nach wenigstens einem der Ansprüche 1 bis 7,
**dadurch gekennzeichnet, dass** der wenigstens eine Lade-Kennwert in Form eines Stromstärkewerts, Spannungswerts, elektrischen Widerstandswerts oder Temperaturgrenzwerts ausgestaltet ist.

9. Verfahren nach wenigstens einem der Ansprüche 1 bis 8,
**gekennzeichnet durch**
- Aussenden wenigstens eines Signals durch eine Anzeigevorrichtung (21) des Akkumulators (3) oder der Ladevorrichtung (24) zum Anzeigen, dass die Ladevorrichtung (24) in der ersten oder zweiten Konfiguration eingestellt ist.

10. System (1) zur Durchführung des Verfahrens zum Steuern eines Ladevorgangs nach wenigstens einem der Ansprüche 1 bis 9, wobei das System eine Ladevorrichtung (24) sowie einen mit der Ladevorrichtung (24) wiederlösbaren Akkumulator (3) enthält, und wobei die Ladevorrichtung (24) eine Steuerungseinrichtung (26) sowie wenigstens einen ersten Transceiver (30) und der Akkumulator (3) eine Steuereinrichtung (18) sowie wenigstens einen zweiten Transceiver (20) enthält,
**dadurch gekennzeichnet, dass** der wenigstens erste Transceiver (30) der Ladevorrichtung (24) und der wenigstens zweite Transceiver (20) des Akkumulators (3) für eine serielle bidirektionale Datenübertragung ausgestaltet sind.

11. System (1) nach Anspruch 10,
**dadurch gekennzeichnet, dass** die Datenübertragung zwischen dem wenigstens ersten Transceiver (30) der Ladevorrichtung (24) und dem wenigstens zweiten Transceiver (20) des Akkumulators (3) auf einer Halb- oder Vollduplex-Technologie basiert.

12. Ladevorrichtung (24) zur Durchführung des Verfahrens zum Steuern eines Ladevorgangs nach wenigstens einem der Ansprüche 1 bis 9 enthaltend eine Steuerungseinrichtung (26) und wenigstens einen Transceiver (30),
**dadurch gekennzeichnet, dass** der wenigstens eine Transceiver (30) für eine Datenübertragung basierend auf einer Halb- oder Vollduplex-Technologie ausgestaltet ist.

13. Akkumulator (3) zur Durchführung des Verfahrens zum Steuern eines Ladevorgangs nach wenigstens einem der Ansprüche 1 bis 9 enthaltend eine Steuereinrichtung (18), eine Speichereinheit (33b) sowie wenigstens einen Transceiver (20),
**dadurch gekennzeichnet, dass** der wenigstens eine Transceiver (20) für eine Datenübertragung basierend auf einer Halb- oder Vollduplex-Technologie ausgestaltet ist.
